# EUROPÄISCHE PATENTSCHRIFT

(11) **EP 3 394 462 B1**
(45) Veröffentlichungstag und Bekanntmachung des Hinweises auf die Patenterteilung: **12.02.2020**
(21) Anmeldenummer: 16810349.7
(22) Anmeldetag: 12.12.2016
(51) Int. Cl.: F16D 48/06, F16D 21/06

(54) **VERFAHREN ZUR STEUERUNG UND/ODER REGELUNG EINER NASSLAUFENDEN KUPPLUNG EINES KRAFTFAHRZEUGS**
METHOD FOR OPEN-LOOP AND/OR CLOSED-LOOP CONTROLLING OF A WET CLUTCH OF A MOTOR VEHICLE
PROCÉDÉ DE COMMANDE ET/OU DE RÉGULATION D'UN EMBRAYAGE À BAIN D'HUILE D'UN VÉHICULE AUTOMOBILE

(30) Priorität: 22.12.2015 DE 102015226537
(43) Veröffentlichungstag der Anmeldung: 31.10.2018
(73) Patentinhaber: Volkswagen Aktiengesellschaft, 38440 Wolfsburg (DE)
(72) Erfinder: MARCHLEWSKI, Marko, 38554 Weyhausen (DE)
(86) Internationale Anmeldenummer: PCT/EP2016/080634
(87) Internationale Veröffentlichungsnummer: WO 2017/108478

(56) Entgegenhaltungen:
- EP-A2- 1 067 008
- DE-A1- 10 201 982
- DE-A1-102010 046 138
- DE-A1-102011 011 152
- DE-A1-102011 105 507

## Beschreibung

Die Erfindung betrifft ein Verfahren zur Steuerung und/oder Regelung einer nasslaufenden Kupplung eines Kraftfahrzeuges, insbesondere mindestens einer der Kupplungen oder beider Kupplungen einer Doppelkupplung eines Kraftfahrzeuges, insbesondere für den Anfahrvorgang und/oder für Schaltabläufe eines Kraftfahrzeuges, gemäß den Merkmalen des Oberbegriffes des Patentanspruchs 1.

In Stand der Technik sind eine Vielzahl von Verfahren zur Steuerung und/oder Regelung von Kupplungen von Kraftfahrzeugen bekannt. Mit Hilfe eines Steuergerätes wird ein bestimmtes Kupplungsmoment eingestellt und zur Einstellung dieses bestimmten Kupplungsmomentes die Kupplung mit einem bestimmten Kupplungsdruck beaufschlagt, wobei die Kupplung dann mit einem bestimmten Kupplungsschlupf betrieben wird. Hierbei ist die funktionale Abhängigkeit des Kupplungsmomentes vom Kupplungsdruck durch mindestens eine, insbesondere in dem Steuergerät abgespeicherte Kupplungskennlinie für einen bestimmten Bereich entsprechend definiert. Hierbei weist die bestimmte bzw. definierte Kupplungskennlinie auch einen bestimmten Reibwert inhärent auf bzw. der abgespeicherten Kupplungskennlinie liegt ein inhärenter Reibwert zugrunde, insbesondere ist nämlich die entsprechend abgespeicherte Kupplungskennlinie mit einem bestimmten Reibwert ermittelt worden, der für die Kupplungskennlinie dann "inhärent" ist.

So ist aus der DE 10 2007 053 706 A1 ein Verfahren zur Steuerung mindestens einer Reibkupplung, nämlich einer Trockenkupplung bekannt, bei dem Temparaturgradienten innerhalb der jeweiligen Kupplungsplatte (Anpressplatte/Zentralplatte) bestimmt werden und aufgrund dieser ermittelten Daten oder eines abgespeicherten Temperaturmodelles eine Stellkennlinie in Abhängigkeit einer bereits abgespeicherten Kennlinie bestimmt und/oder verändert wird. Bei diesem zuvor genannten Verfahren wird für jede Reibkupplung ein schlupfabhängiger und ein temperaturabhängiger Reibwert ermittelt, sowie auch ein von der Anpresskraft/dem Kupplungsdruck abhängiger Reibwert ermittelt, wobei die einzelnen Reibwerte zu einem Gesamtreibwert addiert werden. Hieraus wird dann eine qualitative Änderung des Kurvenverlaufs der Stellkennlinie berechnet, um eine aktualisierte/adaptierte Stellkennlinie zu erhalten.

Weiterhin ist aus der DE 42 41 995 A1 ein Verfahren zur Einstellung des Kupplungsschlupfes einer Reibkupplung eines Kraftfahrzeugs bekannt. Hierbei wird in Abhängigkeit vom Betriebspunkt des Antriebsmotors und von einem zugeordneten, aus einem Kennfeld ausgelesenen Sollwert für den Kupplungsschlupf eine Steuergröße gebildet, die unmittelbar auf ein den Kupplungsschlupf einstellendes Kupplungsstellglied zur Wirkung gebracht wird. Hierdurch wird eine schnelle Änderung des Kupplungsschlupfes erzielt, auch wenn sich das Motormoment zum Beispiel durch eine Drosselklappenbetätigung ändert.

Schließlich ist aus der DE 102 01 982 A1 ein Verfahren zur Steuerung und/oder Regelung einer Kupplung eines Kraftfahrzeugs bekannt, bei dem ein Reibkorrekturwert ermittelt wird und der Reibkorrekturwert zur Korrektur der Kupplungskennlinie verwendet wird.

Bei den im Stand der Technik bekannten Verfahren sind insbesondere die Adaptionsverfahren zur Adaption von Kupplungskennlinien, wo das Kupplungsmoment in Abhängigkeit des Kupplungsdruckes ermittelt wird bzw. abgespeichert ist, noch nicht optimal. Die hier realisierten Adaptionen der Kupplungskennlinie erfolgen nur bei bestimmten Betriebstemperaturen und einem allgemein sehr geringem Kupplungsschlupf. Hierdurch können sich zum Teil dann Differenzen zwischen dem gewünschten Kupplungsmoment und dem tatsächlichen Kupplungsmoment ergeben, nämlich insbesondere dann bei erheblich anderen Betriebsbedingungen. Bei nasslaufenden Kupplungen werden die Kupplungskennlinien bei einer bestimmten Betriebstemperatur und einem geringem Schlupf adaptiert, wobei diesen Kupplungskennlinien als solches aber ein "Grundreibwert", also ein bestimmter Reibwert inhärent ist. Die noch nicht optimalen bekannten Verfahren können daher im Endeffekt zu unkomfortablen Schaltungen, insbesondere während eines Anfahrvorgangs führen.

Der Erfindung liegt daher die Aufgabe zugrunde, das eingangs genannte Verfahren nun derart auszugestalten und weiterzubilden, dass unkomfortable Schaltungen vermieden sind, insbesondere bei einem noch verhältnismäßig zu vertretenem Steuerungsaufwand einerseits die Vorteile der Adaption einer Kupplungskennlinie beibehalten werden, andererseits aber auch noch zusätzliche weitere Faktoren, insbesondere auch verschiedene Betriebszustände berücksichtigt werden können.

Die zuvor aufgezeigte Aufgabe ist nun zunächst durch die Merkmale des Patentanspruches 1 gelöst.

Zunächst wird ein Reibwertkorrekturfaktor ermittelt. Der Reibwertkorrekturfaktur wird in Abhängigkeit eines gewünschten Kupplungsmomentes und/oder in Abhängigkeit des Kupplungsschlupfes und/oder in Abhängigkeit der Kupplungstemperatur und/oder in Abhängigkeit des Alterungszustandes der Kupplung bestimmt und/oder ermittelt. Bei der bevorzugten Ausführungsform wird der Reibwertkorrekturfaktor in Abhängigkeit des gewünschten Kupplungsmomentes, des Kupplungsschlupfes, der Kupplungstemperatur und des Alterungszustandes der Kupplung bestimmt bzw. ermittelt. Nach der Ermittlung des Reibwertkorrekturfaktors wird mit Hilfe des Reibwertkorrekturfaktors aufgrund der Kupplungskennlinie dann ein korrigiertes Kupplungsmoment ermittelt und/oder berechnet. Anhand der Kupplungskennlinie wird dann weiterhin der dann zu diesem korrigierten Kupplungsmoment dazugehörige korrigierte Kupplungsdruck ermittelt. Schließlich wird der so ermittelte korrigierte Kupplungsdruck dann an der Kupplung eingestellt.

Der Vorteil des erfindungsgemäßen Verfahrens liegt zunächst darin, dass insbesondere die im Stand der Technik bekannten Adaptionsverfahren grundsätzlich beibehalten werden können, da das erfindungsgemäße Verfahren den bekannten Verfahren "nachgeschaltet" ist bzw. "nachgeschaltet" werden kann. Das erfindungsgemäße Verfahren berücksichtigt nun weitere unterschiedliche Faktoren, wie die Höhe des gewünschten Kupplungsmomentes, des jeweiligen Kupplungsschlupfes, der aktuellen Kupplungstemperatur und des aktuellen Alterungszustandes der Kupplung, und ermittelt insbesondere in Abhängigkeit dieser zuvor genannten Faktoren dann einen Reibwertkorrekturfaktor. Der Reibwertkorrekturfaktor wird genutzt, um die ursprünglich vom Steuergerät einzustellende "Soll-Größe", nämlich das einzustellende Kupplungsmoment zu korrigieren, insbesondere zu einem einzustellenden korrigierten Kupplungsmoment. Anhand des korrigierten Kupplungsmomentes und der Kupplungskennlinie wird der zum korrigierten Kupplungsmoment gehörende bzw. hierzu korrespondierende korrigierte Kupplungsdruck ermittelt, der dann an der Kupplung auch eingestellt wird.

Aufgrund der Ermittlung des Reibwertkorrekturfaktors können nun auch unterschiedliche Betriebsbedingungen in die Korrektur einfließen. Es wird nun nicht mehr nur - wie bisher im Stand der Technik - ein kleiner Teilbereich der Kupplungskennlinie adaptiert, sondern es können nun über einen großen Bereich die verschiedensten Faktoren jeweils berücksichtigt werden. Hierzu sind insbesondere eine Vielzahl von Kennfeldern im Steuergerät abgelegt, was im Folgenden noch ausführlicher erläutert werden wird. Das gewünschte Kupplungsmoment ist -im Ergebnis - wesentlich genauer realisierbar, so dass insbesondere die Schaltabläufe im Getriebe des Kraftfahrzeugs optimiert ablaufen können und der Fahrtkomfort erheblich verbessert ist.

Es gibt nun eine Vielzahl von Möglichkeiten das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden darf nun ein bevorzugtes Ausführungsbeispiel anhand der nachfolgenden Beschreibung und der dazugehörigen Zeichnungen näher beschrieben werden. In der Zeichnung zeigt:

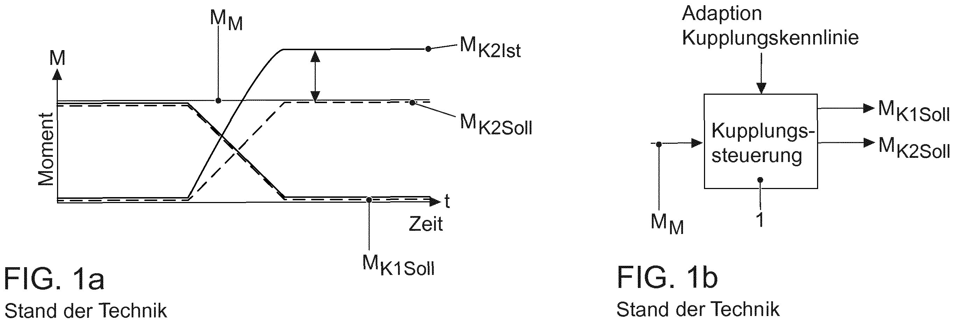

- Fig. 1a, 1b: eine im Stand der Technik bekannte Kupplungssteuerung einer Doppelkupplung mit Darstellung der jeweiligen Momentenverläufe bei einer Schaltung (vgl. Fig. 1a), und ein schematisches Schaltbild des bisher im Stand der Technik angewendeten Verfahrens (vgl. Fig. 1b),

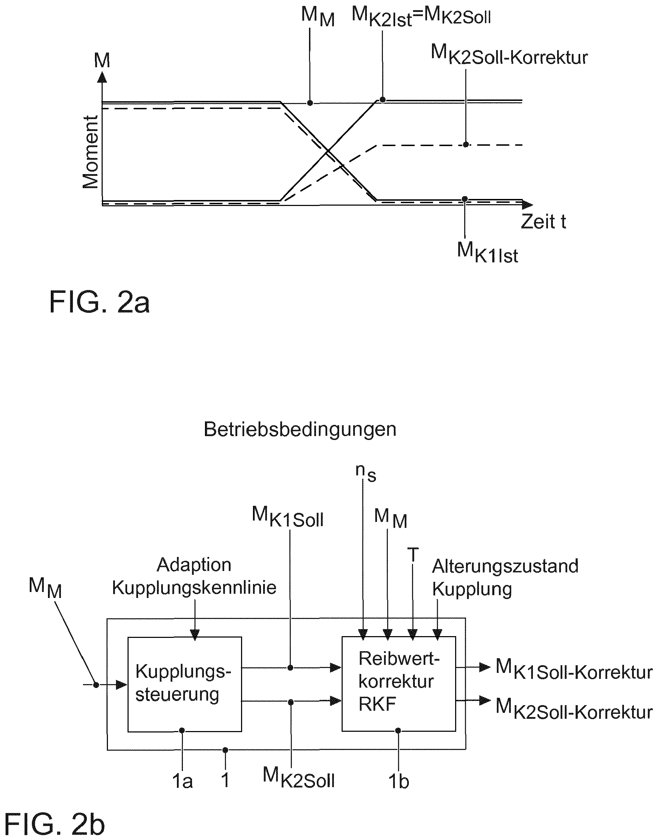

- Fig. 2a, b2: in schematischer Darstellung das erfindungsgemäße Verfahren, nämlich die Realisierung eines tatsächlichen Kupplungsmomentes mit Hilfe eines ermittelten korrigierten Kupplungsmomentes M_{KSoll-Korrektur} (vgl. Fig. 2a), und in schematischer Darstellung zumindest teilweise den mit Hilfe eines Steuergerätes schematisch dargestellten Schaltungsablauf des erfindungsgemäßen Verfahrens (vgl. Fig. 2b),

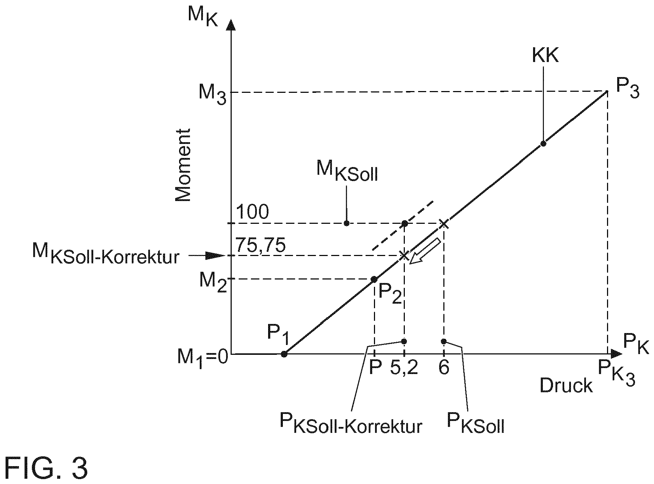

- Fig. 3: in schematischer Darstellung eine in einem Steuergerät abgelegte Kupplungskennlinie,

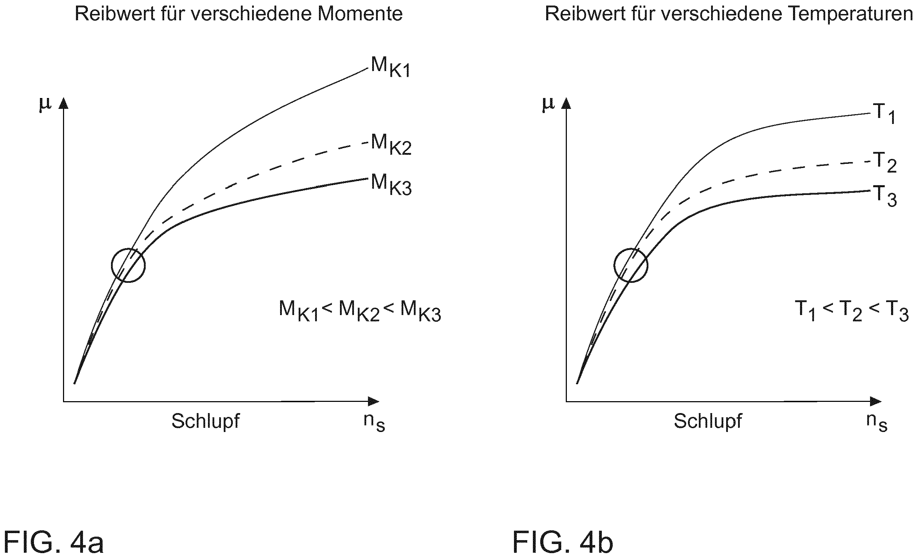

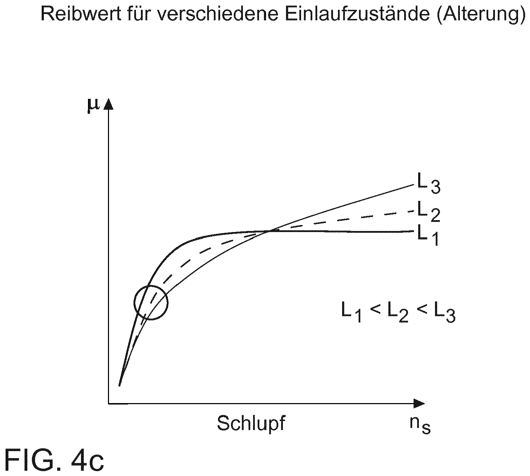

- Fig. 4a, 4b, 4c: in schematischer Darstellung die unterschiedlichen Verläufe/Abhängigkeiten von Reibwerten dargestellt über den Kupplungsschlupf, in Abhängigkeit von unterschiedlich grossen Kupplungsmomenten (vgl. Fig. 4a), von unterschiedlich grossen Kupplungstemperaturen (vgl. Fig. 4b), sowie in Abhängigkeit von unterschiedlichen Alterungszuständen der Kupplung (vgl. Fig. 4c),

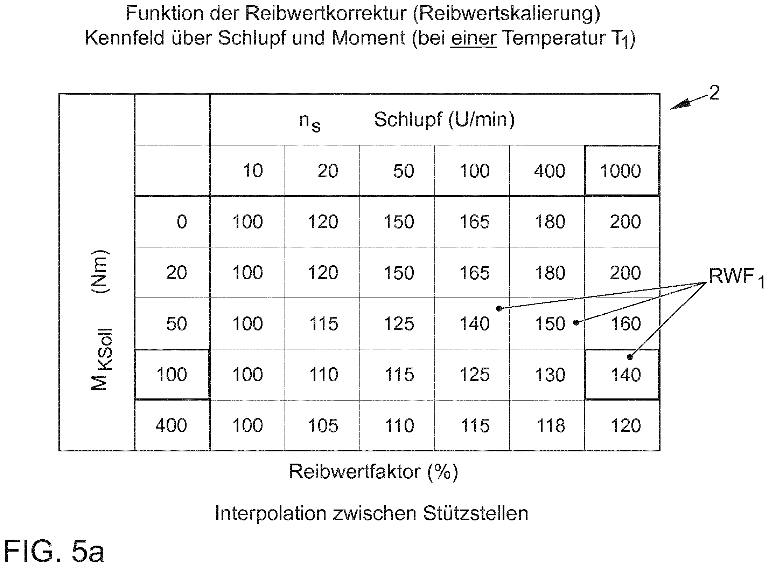

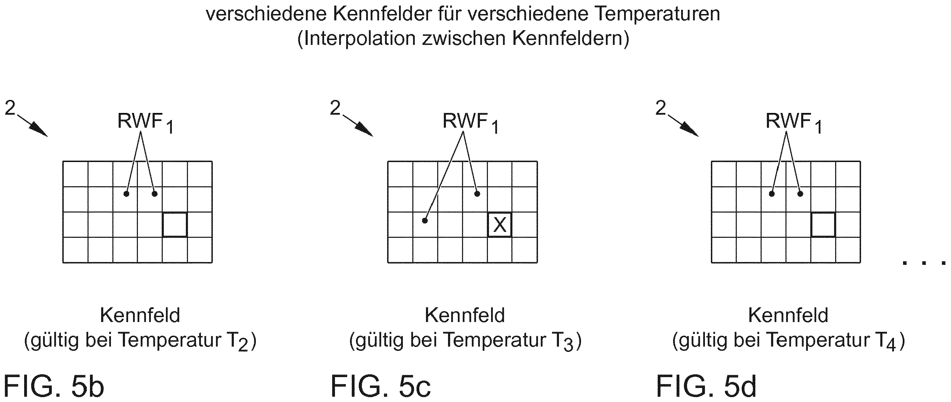

- Fig. 5a, 5b, 5c,: 5d zunächst in schematischer Darstellung ein erstes Kennfeld zur Bestimmung eines ersten Reibwertfaktors in Abhängigkeit des gewünschten Kupplungsmomentes und des Kupplungsschlupfes für eine bestimmten erste Kupplungstemperatur (vgl. Fig. 5a), sowie nur schematisch angedeutete weitere erste Kennfelder für eine zweite (vgl. Fig. 5b), für eine dritte (vgl. Fig. 5c) und für eine vierte (vgl. Fig. 5d) Kupplungstemperatur, sowie

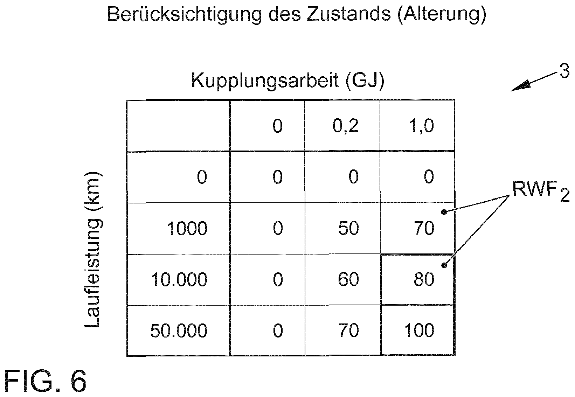

- Fig. 6: in schematischer Darstellung ein zweites Kennfeld zur Bestimmung von zweiten Reibwertfaktoren in Abhängigkeit der Laufleistung der Kupplung und der geleisteten Kupplungsarbeit.

So zeigt die Fig. 1 nun zunächst die Ansteuerung zweier Kupplungen einer Doppelkupplung eines Doppelkupplungsgetriebes eines Kraftfahrzeugs, so wie diese derzeit im Stand der Technik angesteuert werden: Bei einem Gangstufenwechsel wird das Kupplungsmoment M_{K1Soll} der sich öffnenden ersten Kupplung verringert und das Kupplungsmoment M_{K2Soll} der sich schliessenden zweiten Kupplung erhöht, damit die zweite Kupplung das Drehmoment in der neuen Gangstufe auch entsprechend übertragen kann.

Dargestellt in Fig. 1a ist die Ansteuerung/Überschneidung der Kupplungsmomente M_{K1Soll} bzw. M_{K2Soll} , wobei zwar über das Steuergerät die jeweiligen gewünschten Kupplungsmomente M_{K1Soll} und M_{K2Soll} eingestellt werden, aber wie die Fig. 1a zeigt, das an der zweiten Kupplung dann real tatsächlich anliegende Kupplungsmoment M_{K2Ist} von M_{K2Soll} entsprechend abweichen kann. Letzteres insbesondere aufgrund unterschiedlicher Betriebszustände, wie eingangs bereits erläutert. In Fig. 1a wird das Motormoment M_{M} während des Schaltvorganges im Wesentlichen konstant gehalten.

Fig. 1b veranschaulicht schematisch, einen im Stand der Technik bekannten Schaltablauf für ein Steuergerät 1, wobei bei dem gemäß Fig. 1a bekannten Verfahren dem Steuergerät 1 nun entsprechende Werte, wie beispielsweise das Motormoment M_{M} und/oder andere Werte zugeleitet werden, insbesondere auch die Werte einer Kupplungskennlinie im Steuergerät 1 abgelegt sind und/oder diese Werte für einen spezifischen Betriebszustand abgelegt sind. Das Steuergerät 1 gibt hier nun entsprechende Sollgrößen zur Ansteuerung der ersten und zweiten Kupplung eines Doppelkupplungsgetriebes, insbesondere an einen nicht dargestellten Kupplungsregler ab, hier das an den jeweiligen Kupplungen zu realisierende jeweilige gewünschte Kupplungsmoment M_{K1Soll} bzw. M_{K2Soll}.

Zu dem bekannten sowie erfindungsgemässen Verfahren darf nun allgemein folgendes vorab ausgeführt werden: Bei dem Verfahren zur Steuerung und/oder Regelung einer nasslaufenden Kupplung eines nicht näher dargestellten Kraftfahrzeuges, insbesondere mindestens einer der Kupplungen oder beider Kupplungen einer Doppelkupplung eines Kraftfahrzeuges, insbesondere für den Anfahrvorgang eines Kraftfahrzeuges wird nun mit Hilfe eines Steuergerätes 1 ein bestimmtes Kupplungsmoment M_{K} eingestellt und zur Einstellung dieses bestimmten Kupplungsmomentes M_{K} die Kupplung mit einem bestimmten Kupplungsdruck P_{K} beaufschlagt und mit einem bestimmten Kupplungsschlupf nₛ betrieben. Hierbei ist die funktionale Abhängigkeit des Kupplungsmomentes M_{K} vom Kupplungsdruck P_{K} durch mindestens eine, insbesondere in dem Steuergerät 1 abgespeicherte Kupplungskennlinie KK für einen bestimmten Bereich definiert. Die Kupplungskennlinie KK weist auch einen bestimmen Reibwert der Kupplung als inhärenten Wert auf bzw. liegt der abgespeicherten Kupplungskennlinie KK ein inhärenter Reibwert zugrunde.

Das grundlegende Prinzip des erfindungsgemäßen Verfahrens wird nun zunächst in allgemeiner Darstellung anhand der Fig. 2a und 2b allgemein erläutert:
Die eingangs genannten Nachteile sind nun zunächst dadurch vermieden, dass zunächst ein Reibwertkorrekturfaktor RKF in Abhängigkeit eines gewünschten Kupplungsmomentes M_{KSoll} und/oder in Abhängigkeit des Kupplungsschlupfes ns und/oder in Abhängigkeit der Kupplungstemperatur T und/oder in Abhängigkeit des Alterungszustandes der Kupplung bestimmt und/oder ermittelt wird, dass mit Hilfe des Reibwertkorrekturfaktors RKF aufgrund der Kupplungskennlinie KK dann ein korrigiertes Kupplungsmoment M_{KSoll-Korrektur} ermittelt und/oder berechnet wird, das anhand der Kupplungskennlinie KK der dann zu diesem korrigierten Kupplungsmoment M_{KSoll-Korrektur} der dazugehörige korrigierte Kupplungsdruck P_{KSoll-Korrektur} ermittelt wird, wobei der so ermittelte korrigierte Kupplungsdruck P_{KSoll-Korrektur} dann an der Kupplung auch eingestellt wird.

Fig. 2a zeigt ein korrigiertes Kupplungsmoment M_{K2Soll-Korrektur} für die zweite Kupplung, wobei im Unterschied zur Fig. 1a deutlich zu erkennen ist, dass hieraufhin das tatsächliche Kupplungsmoment M_{K2Ist} dann im Wesentlichen dem gewünschten Kupplungsmoment M_{KSoll} entspricht. Das in Fig. 2a dargestellte erfindungsgemäße Verfahren wird insbesondere mit Hilfe eines Steuergerätes gemäß dem in Fig. 2b, teilweise dargestellten Ablauf realisiert: Dem Steuergerät 1 werden entsprechende Werte wie das Motormoment M_{M} zugeführt bzw. sind im Steuergerät 1 die entsprechenden Daten für die Kupplungskennlinie KK und/oder eine etwaige bereits bekannte Adaption abgelegt, letzteres alles insbesondere in einer Steuereinheit 1a. Weiterhin werden dem Steuergerät 1, insbesondere einer Steuereinheit 1b aktuelle Betriebsparameter insbesondere kontinuierlich zugeführt, hierzu zählen insbesondere die Schlupfdrehzahl nₛ, die Kupplungstemperatur T, Werte über den Alterungszustand der Kupplung, wie bspw. die Laufleistung (in Km) bzw. die Kupplungsarbeit (in GJ), und/oder ein angefordertes Motormoment M_{M} bzw. sind derartige Werte teilweise auch in Kennfeldern abgelegt, was im Folgenden noch näher erläutert werden wird. Insbesondere in der Steuereinheit 1b, wobei die Steuereinheiten 1a und 1b auch als eine Steuereinheit, beispielsweise als ein Mikroprozessor realisiert sein können, erfolgt dann die Ermittlung des Reibwertkorrekturfaktors RKF.

Zunächst werden auf Basis der Kupplungskennlinie KK die üblichen Kupplungsmomente für die erste und zweite Kupplung M_{K1-Soll} bzw. M_{K2-Soll} abgerufen bzw. hier der Steuereinheit 1b zugeführt. Es wird dann ein Reibwertkorrekturfaktor RKF ermittelt, insbesondere auf Basis der vorliegenden Daten/Kennfelder, mit deren Hilfe dann bei einer Doppelkupplung für die erste und für die zweite Kupplung jeweilige korrigierte Kupplungsmomente M_{K1Soll-Korrektur} bzw. M_{K2Soll-Korrektur} ermittelt bzw. berechnet werden, mit deren Hilfe dann im Endeffekt, nämlich durch die Ermittlung des hierzu anhand der Kupplungskennlinie korrespondierenden jeweiligen korrigierten Kupplungsdruckes P_{KSoll-Korrektur} (P_{K1Soll-Korrektur} bzw. P_{K2Soll-Korrektur}) dann an der jeweiligen Kupplung der jeweilige korrigierte Kupplungsdruck P_{KSoll-Korrektur} (P_{K1Soll-Korrektur} bzw. P_{K2Soll-Korrektur}) eingestellt wird. Hierzu werden bzw. können die in Fig. 2b dargestellten korrigierten Kupplungsmomente M_{K1Soll-Korrektur} bzw. M_{K2Soll-Korrektur} dann auch einem Kupplungsregler vom Steuergerät 1 zugeleitet werden, wobei der Kupplungsregler auf Basis der korrigierten Kupplungsmomente M_{K1Soll-Korrektur} bzw. M_{K2Soll-Korrektur} die dazugehörigen bzw. korrespondierenden korrigierten Kupplungsdrücke, wie oben beschrieben, einstellen kann.

Zu dem erfindungsgemäßen Verfahren darf im Einzelnen nunmehr ausführlich folgendes anhand der Fig. 3 bis 6 ausgeführt werden, wobei gleiche Komponenten mit den Bezugszeichen, die auch bereits bei der Beschreibung der Fig. 1a und 1b (Stand der Technik) verwendet worden sind, nun auch bei Beschreibung der Fig. 2 bis 6 verwendet werden:

Fig. 3 zeigt eine Kupplungskennlinie KK, die insbesondere in einem Steuergerät 1 abgelegt bzw. gespeichert ist. Auf der X-Achse ist der Kupplungsdruck P_{K} und auf der Y-Achse das Kupplungsmoment M_{K} dargstellt. Bei der hier bevorzugten Ausführungsform verläuft die Kupplungskennlinie KK im Wesentlichen linear konstant steigend. Das erfindungsgemäße Verfahren dient zur Steuerung und/oder Regelung einer nasslaufenden Kupplung eines Kraftfahrzeuges, insbesondere mindestens einer der Kupplungen oder beider Kupplungen einer Doppelkupplung eines Kraftfahrzeuges. Das erfindungsgemäße Verfahren wird insbesondere für den Anfahrtvorgang und/oder für Schaltabläufe eines Kraftfahrzeugs eingesetzt. Mit Hilfe des Steuergerätes 1 wird ein bestimmtes Kupplungsmoment M_{K} an der Kupplung eingestellt, wobei zur Einstellung dieses bestimmten Kupplungsmomentes M_{K} die Kupplung mit einem bestimmten Kupplungsdruck P_{K} beaufschlagt und mit einem bestimmten Kupplungsschlupf nₛ betrieben wird.

Fig. 3 zeigt die Abhängigkeit des Kupplungsmomentes M_{K} vom Kupplungsdruck P_{K} durch die hier dargestellte, insbesondere in dem Steuergerät 1 abgespeicherte Kupplungskennlinie KK. Die Kupplungskennlinie KK verläuft hier über einen bestimmten Bereich und definiert daher entsprechende Kupplungsmomente M_{K} für bestimmte Kupplungsdrücke P_{K}. Die in Fig. 3 dargestellte Kupplungskennlinie KK weist als inhärenten Bestandteil auch einen bestimmten Reibwert auf bzw. liegt dieser abgespeicherten Kupplungskennlinie KK ein inhärenter Reibwert zugrunde.

Die Fig. 4a, 4b und 4c zeigen nun zum besseren allgemeinen Verständnis entsprechende Kennlinien, nämlich die Abhängigkeit eines Reibwertes µ vom Schlupf nₛ bei unterschiedlichen Kupplungsmomenten, bei unterschiedlichen Kupplungstemperaturen und bei unterschiedlichen Alterungszuständen der Kupplung.

So zeigt die Fig. 4a, dass der jeweilige Reibwert µ bei unterschiedlichen Kupplungsmomenten M_{K1}, M_{K2} und M_{K3}, wenn gilt M_{K1} < M_{K2} < M_{K3}, bei einem bestimmten konstanten Kupplungsschlupf für das Kupplungsmoment M_{K1} gross , für das Kupplungsmoment M_{K3} aber entsprechend geringer ist. Fig. 4a verdeutlicht also die Abhängigkeit eines Reibwertes µ in Abhängigkeit des Kupplungsschlupfes und in Abhängigkeit unterschiedlicher Momente M_{K1} bis M_{K3}.

Fig. 4b verdeutlicht in schematischer Darstellung die Abhängigkeit eines Reibwertes µ vom Kupplungsschlupf nₛ in Abhängigkeit unterschiedlicher Kupplungstemperaturen T₁, T₂ und T₃. Fig. 4b zeigt, dass der Reibwert µ für den Fall, dass für die Kupplungstemperatur T₁ < T₂ < T₃ gilt, für einen bestimmten Kupplungsschlupf nₛ im Fall der Kupplungstemperatur T₁ gross und im Fall der Kupplungstemperatur T₃ entsprechend geringer ist bzw. verdeutlicht die Fig. 4b die entsprechenden Abhängigkeiten, so wie ersichtlich.

Schließlich verdeutlicht die Fig. 4c die Abhängigkeit des Reibwertes µ vom Alterungszustand der Kupplung, wobei der Alterungszustand der Kupplung insbesondere durch die Laufleistung der Kupplung (in Km) bzw. durch die Kupplungsarbeit (GJ/GigaJoule) beschrieben wird. Aus Fig. 4c wird deutlich, dass der Reibwert µ in Abhängigkeit des Kupplungsschlupfes nₛ für einen jeweiligen Alterungszustand der Kupplung mit L₁, L₂, L₃ entsprechend unterschiedlich ist, so wie in Fig. 4c dargestellt.

Die Fig. 5a zeigt beispielhaft für die bevorzugte Ausführungsform ein erstes Kennfeld, hier insbesondere für eine bestimmte erste Kupplungstemperatur T₁, das insbesondere auch im Steuergerät 1 abgespeichert ist. In dem ersten Kennfeld 2 sind nun für unterschiedliche Kupplungsschlupf-Drehzahlen nₛ und für unterschiedliche gewünschte Kupplungsmomente M_{KSoll} bestimmte erste Reibwertfaktoren RWF₁ hinterlegt.

Die Fig. 5b bis 5d zeigen nun in schematischer Darstellung weitere erste Kennfelder 2, die im Wesentlichen genauso aufgebaut sind, wie das in Fig. 5a dargestellte erste Kennfeld 2, jedoch sind die jeweiligen hier in den Fig. 5b bis 5d dargestellten ersten Kennfelder 2 für andere Temperaturen hinterlegt, weisen also für andere, weitere Temperaturen bestimmte erste Reibwertfaktoren RWF₁ in Abhängigkeit von jeweiligen Kupplungsschlupf-Drehzahlen und gewünschten Kupplungsmomenten M_{KSoll} auf. So weist beispielweise das erste Kennfeld 2 aus Fig. 5b entsprechende erste Reibwertfakturen RWF₁ für eine Kupplungstemperatur T₂, das in Fig. 5c dargestellte Kennfeld 2 für eine Kupplungstemperatur T₃ und das in Fig. 5d dargestellte Kennfeld 2 erste Reibwertfaktoren RWF₁ für eine Kupplungstemperatur T₄ auf. Eine Vielzahl von derartigen ersten Kennfeldern 2 ist daher für jeweilige bestimmte Kupplungstemperaturen T₁, T₂, T₃ ... Tₙ abgespeichert, insbesondere im Steuergerät 1 hinterlegt.

Fig. 6 zeigt nun die Darstellung eines zweiten Kennfeldes 3, insbesondere in tabellarischer Darstellung wie auch das erste Kennfeld 2 in den Fig. 5. In Fig. 6 weist das zweite Kennfeld 3 entsprechende Werte für verschiedene Laufleistungen der Kupplungen (in Km) auf sowie eine durch die Kupplung geleistete Kupplungsarbeit (GJ, GigaJoule). Das Kennfeld weist dann hierzu entsprechend jeweilige zweite Reibwertfaktoren RWF₂ auf. Die zweiten Reibwertfaktoren RWF₂ können auch als "Lebensdauereinflussfaktoren" oder "Alterungseinflussfaktoren" bezeichnet werden, insbesondere werden diese Faktoren zur Korrektur der zuvor genannten ersten Reibwertfaktoren RWF₁ herangezogen.

Die ersten und/oder zweiten Reibwertfaktoren RWF₁ bzw. RWF₂ sind relativ zu dem in der Kupplungskennlinie KK inhärenten Reibwert nun entsprechend skaliert, insbesondere wird der der Kupplungskennlinie KK zugrundeliegende inhärente Reibwert mit 100 % oder mit "1" bewertet bzw. bestimmt, wobei der erste und/oder zweite Reibwertfaktor hierzu jeweils entsprechend relativ skaliert sind.

Bei dem hier dargestellten bevorzugten Ausführungsbeispiel wird der der Kupplungskennlinie KK zugrundeliegende inhärente Reibwert mit 100 % bewertet, wobei in Fig. 5 die ersten Reibwertfaktoren RWF₁ in % angegeben sind, sowie die zweiten Reibwertfaktoren RWF₂ in Fig. 6 ebenfalls hier in % angegeben sind, so wie aus den Fig. 5 bis 6 ersichtlich.

Die ersten und zweiten Kennfelder 2 und 3, sind insbesondere im Steuergerät 1 abgelegt und ergeben sich insbesondere durch Messverfahren bzw. durch entsprechend gewonnene Messwerte.

Im Folgenden soll nun die Ermittlung des Reibwertkorrekturfaktors RKF des erfindungsgemäßen Verfahrens näher beschrieben werden:
Wird beispielsweise, wie in Fig. 3 gezeigt, ein gewünschtes Kupplungsmoment M_{KSoll}, hier von beispielsweise 100 Nm an der Kupplung eingestellt bzw. soll entsprechd eingestellt werden, so muss gemäß der Kupplungskennlinie KK ein bestimmter Kupplungsdruck P_{KSoll} realisiert werden, hier biespielsweise dann von 6 bar. In einem ersten Schritt wird nun der erste Reibwertfaktur RWF₁ mit Hilfe des ersten Kennfeldes 2 ermittelt, das für die jeweilige Kupplungstemperatur T_{X} entsprechend gültig ist. Beispielsweise wird dann für die dann aktuelle Kupplungstemperatur T₁ für ein gewünschtes Kupplungsmoment M_{KSoll} von 100 Nm bei einem bestimmten Kupplungsschlupf n_{S} von 1000 Umdrehungen/pro Minute ein erster Reibwertfaktor RWF₁ von 140 % ermittelt, so wie in Fig. 5a durch die stärkere Umrandung verdeutlicht sein soll. In einem zweiten Schritt wird dann mit Hilfe des zweiten Kennfeldes 3 (vgl. Fig. 6) ein zweiter Reibwertfaktor RWF₂ ermittelt, von beispielsweise 80 %, wenn beispielsweise die Kupplungsarbeit 1,0 GJ gewesen ist und die bisherige Laufleistung der Kupplung 10.000 Km ist.

Damit ist ein erster Reibwertfaktor RWF₁ und ein zweiter Reibwertfaktur RWF₂ festgelegt, hier beispielsweise RWF₁ = 140 % und RWF₂ = 80 %. Es darf darauf hingewiesen werden, dass nicht explizit im Kennfeld angegebene bzw. hierdurch abgespeicherte Reibwertfaktoren RWF₁/RWF₂ natürlich auch durch eine Interpolation zwischen entsprechenden Stützstellen, insbesondere ebenfalls mit Hilfe des Steuergerätes bzw. eines hier im Steuergerät 1 existierenden Mikroprozessors/Computerprogrammes interpoliert und ermittelt werden können, um entsprechende Reibwertfaktoren RWF₁/RWF₂ zu berechnen.

Im nächsten Schritt wird nun eine Differenz Δ, insbesondere durch Subtraktion zwischen dem ermittelten ersten Reibwertfaktor RWF₁ und dem inhärenten Reibwert ermittelt. Für das oben genannte Beispiel gilt dann: Differenz Δ = 140 % - 100 % = 40 %. Diese so ermittelte Differenz Δ wird nun mit Hilfe des zweiten Reibwertfaktors RWF₂ nochmals korrigiert bzw. angepasst. Insbesondere wird die ermittelte Differenz Δ mit dem zweiten Reibwertfaktor multipliziert, wenn der zweite Reibwertfaktor auf "1" skaliert ist, (also 80 % = 0,8). So wird dann der Alterungszustand der Kupplung berücksichtigt und aus der ermittelten Differenz Δ ein Differenz-Korrekturwert Δ_{Korrektur} ermittelt. Es gilt bei dem zuvor genannten Beispiel: Differenz-Korrekturwert Δ_{Korrektur}= 40 % X 0,8 = 32 %.

Schließlich wird aus dem ermittelten Differenz-Korrekturwert Δ_{Korrektur} und dem inhärenten Reibwert der Reibwertkorrekturfaktor RKF, ermittelt, insbesondere durch eine Addition. Insbesondere gilt RKF = Differenz-Korrekturwert Δ_{Korrektur} + 100 % (inhärenter Reibwert), also für das obige Ausführungsbeispiel gilt dann RKF = 32 % + 100 % = 132 % (oder auch wieder auf "1" skaliert RKF = 1,32).

Mit Hilfe des nunmehr so ermittelten Reibwertkorrekturfaktors RKF und des gewünschten Kupplungsmomentes M_{KSoll} wird dann das für die Kupplungskennlinie KK dann gültige vom Steuergerät einzustellende korrigierte Kupplungsmoment M_{KSoll-Korrektur} ermittelt, insbesondere durch eine Division des gewünschten Kupplungsmomentes M_{KSoll} durch den Reibwertkorrekturfaktor RKF. Es gilt allgemein M_{KSoll-Korrektur} = M_{KSoll} / RKF, bei dem hier zuvor genannten Ausführungsbeispiel gilt dann: M_{KSoll-Korrektur} = 100 Nm / 1,32 (auf "1" skaliert) = ca. 75,75 Nm. Nun wird über das ermittelte korrigierte Kupplungsmomentes M_{KSoll}-_{Korrektur} anhand der Kupplungskennlinie KK der hierzu zugehörige bzw. korrespondierende korrigierte Kupplungsdruck P_{KSoll-Korrektur} ermittelt. Bei dem hier dargestellten Ausführungsbeispiel ein Wert von P_{KSoll-Korrektur} = 5,2 bar.

Nun wird vom Steuergerät 1 als Wert für den tatsächlich einzustellenden Kupplungsdruck P_{K} dieser Wert, also der korrigierte Kupplungdruck P_{KSoll-Korrektur} verwendet und an der Kupplung eingestellt, um so dann das gewünschte Kupplungsmoment M_{KSoll} zu realisieren bzw. um damit - dann im Endeffekt - dann das gewünschte tatsächliche Kupplungsmoment M_{KIst} zu realisieren, das bei dem bevorzugten oben erläuterten Beispiel insbesondere dann im Wesentlichen 100 Nm entspricht. Im Endeffekt wird dann an der Kupplung insbesondere als einzustellendes Kupplungsmoment M_{K} dann das korrigierte Kupplungsmoment M_{KSoll-Korrektur} bzw. als einzustellender Kupplungsdruck P_{K} der korrigierte Kupplungsdruck P_{KSoll-Korrektur} eingestellt, um das gewünschte Kupplungsmoment M_{KSoll} auch zu realisieren, das insbesondere dann auch dem tatsächlichen Kupplungsmoment M_{KIst} entspricht.

### BEZUGSZEICHENLISTE

- 1: Steuergerät
- 2: erstes Kennfeld
- 3: zweites Kennfeld
- M_{KIst}: Kupplungsistmoment,
- M_{KSoll}: gewünschtes Kupplungsmoment
- M_{KSoll-Korrektur}: korrigiertes Kupplungsmoment
- P_{K}: Kupplungsdruck
- P_{KSoll-Korrektur}: korrigierter Kupplungsdruck
- T: Kupplungstemperatur
- M_{K}: Kupplungsmoment
- P_{K}: Kupplungsdruck
- KK: Kupplungskennlinie
- RKF: Reibwertkorrekturfaktor
- nₛ: Kupplungsschlupf
- RWF₁: erster Reibwertfaktor
- RWF₂: zweiter Reibwertfaktor
- M_{M}: Motormoment
- Differenz Δ Differenz-Korrekturwert: Δ_{Korrektur}

## Patentansprüche

1. Verfahren zur Steuerung und/oder Regelung einer nasslaufenden Kupplung eines Kraftfahrzeuges, insbesondere mindestens einer der Kupplungen oder beider Kupplungen einer Doppelkupplung eines Kraftfahrzeuges, insbesondere für den Anfahrvorgang und/oder für Schaltabläufe eines Kraftfahrzeuges, wobei mit Hilfe eines Steuergerätes (1) ein bestimmtes Kupplungsmoment (M_{K}) eingestellt und zur Einstellung dieses bestimmten Kupplungsmomentes (M_{K}) die Kupplung mit einem bestimmten Kupplungsdruck (P_{K}) beaufschlagt und mit einem bestimmten Kupplungsschlupf (n_{S}) betrieben wird, wobei die funktionale Abhängigkeit des Kupplungsmomentes (M_{K}) vom Kupplungsdruck (P_{K}) durch mindestens eine, insbesondere in dem Steuergerät abgespeicherte Kupplungskennlinie (KK) für einen bestimmten Bereich definiert ist, wobei die Kupplungskennlinie (KK) auch einen bestimmten Reibwert inhärent aufweist bzw. der abgespeicherten Kupplungskennlinie (KK) ein inhärenter Reibwert zugrunde liegt, und wobei zunächst ein Reibwertkorrekturfaktor (RKF) in Abhängigkeit eines gewünschten Kupplungsmomentes (MK_{Soll}) und/oder in Abhängigkeit des Kupplungsschlupfes (n_{S}) und/oder in Abhängigkeit der Kupplungstemperatur (T) und/oder in Abhängigkeit des Alterungszustandes der Kupplung bestimmt und/oder ermittelt wird, **dadurch gekennzeichnet, dass** mit Hilfe des Reibwertkorrekturfaktors (RKF) aufgrund der Kupplungskennlinie (KK) dann ein korrigiertes Kupplungsmoment (M_{KSoll-Korrektur}) ermittelt und/oder berechnet wird, dass anhand der Kupplungskennlinie (KK) der dann zu diesem korrigiertem Kupplungsmoment (M_{KSoll-Korrektur}) dazugehörige korrigierte Kupplungsdruck (P_{KSoll-Korrektur}) ermittelt wird, wobei der so ermittelte korrigierte Kupplungsdruck (P_{KSoll-Korrektur}) dann an der Kupplung auch eingestellt wird.

2. Verfahren nach Anspruch 1, **dadurch gekennzeichnet, dass** mindestens ein erstes Kennfeld (2) für eine bestimmte erste Kupplungstemperatur (T) abgespeichert ist, wobei in dem ersten Kennfeld (2) für unterschiedliche Kupplungsschlupf-Drehzahlen (ns) und für unterschiedliche gewünschte Kupplungsmomente (MK_{Soll}) bestimmte erste Reibwertfaktoren (RWF₁) hinterlegt sind.

3. Verfahren nach Anspruch 1, **dadurch gekennzeichnet, dass** eine Vielzahl von derartigen ersten Kennfeldern (2) für jeweilige unterschiedliche bestimmte Kupplungstemperaturen (T) abgespeichert sind.

4. Verfahren nach Anspruch 1 oder 2, **dadurch gekennzeichnet, dass** mindestens ein zweites Kennfeld (3) für den Alterungszustand der Kupplung abgespeichert ist, wobei in dem zweiten Kennfeld (3) für unterschiedliche Laufleistungen der Kupplung und für unterschiedliche geleistete Kupplungsarbeit jeweilige bestimmte zweite Reibwertfaktoren (RWF₂) abgespeichert sind.

5. Verfahren nach einem der vorstehenden Ansprüche, **dadurch gekennzeichnet, dass** die ersten und/oder zweiten Reibwertfaktoren (RWF₁/RWF₂) relativ zu dem in der Kupplungskennlinie (KK) inhärenten Reibwert skaliert sind, insbesondere der der Kupplungskennlinie (Kk) zugrundeliegende inhärente Reibwert mit "100%" oder mit "1" bewertet bzw. bestimmt ist und der erste und/oder der zweite Reibwertfaktor (RWF₁/RWF₂) hierzu jeweils entsprechend relativ skaliert sind .

6. Verfahren nach einem der vorstehenden Ansprüche, **dadurch gekennzeichnet, dass** in einem ersten Schritt der erste Reibwertfaktor (RWF₁) mit Hilfe eines ersten Kennfeldes (2) ermittelt wird und/oder der zweite Reibwertfaktor (RWF₂) in einem zweiten Schritt mit Hilfe des zweiten Kennfeldes (3) ermittelt wird.

7. Verfahren nach einem der vorstehenden Ansprüche, **dadurch gekennzeichnet, dass** zunächst eine Differenz (Δ), insbesondere durch Subtraktion zwischen dem ermittelten ersten Reibwertfaktor (RWF₁) und dem inhärenten Reibwert ermittelt wird, dass diese ermittelte Differenz (Δ) mit Hilfe des zweiten Reibwertfaktors (RWF₂) nochmals korrigiert bzw. angepasst wird, insbesondere die ermittelte Differenz (Δ) mit dem zweiten Reibwertfaktor (RWF₂) multipliziert wird, um einen auch den Alterungszustand der Kupplung berücksichtigenden Differenz-Korrekturwert (Δ_{Korrektur)} zu ermitteln.

8. Verfahren nach Anspruch 7, **dadurch gekennzeichnet, dass** aus dem ermittelten Differenz-Korrekturwert (Δ_{Korrektur}) und dem inhärenten Reibwert der Reibwertkorrekturfaktor (RKF), insbesondere durch eine Addition ermittelt wird.

9. Verfahren nach Anspruch 8, **dadurch gekennzeichnet, dass** mit Hilfe des Reibwertkorrekturfaktors (RKF) und des gewünschten Kupplungsmomentes (M_{KSoll}) das für die Kupplungskennlinie (KK) dann gültige, vom Steuergerät (1) einzustellende korrigierte Kupplungsmoment (M_{KSoll-Korrektur}) ermittelt wird, insbesondere durch eine Division des gewünschten Kupplungmomentes (M_{KSoll}) durch den Reibwertkorrekturfaktor (RFK).

10. Verfahren nach Anspruch 9, **dadurch gekennzeichnet, dass** mit Hilfe des korrigierten Kupplungsmomentes (M_{KSoll-Korrektur}) anhand der Kupplungskennlinie (KK) der zugehörige korrigierte Kupplungsdruck (P_{KSoll-Korrektur}) ermittelt wird, der dann vom Steuergerät (1) als Wert für den tatsächlich einzustellenden Kupplungsdruck (P_{K}) verwendet wird, um das gewünschte Kupplungsmoment (M_{KSoll}) zu realisieren bzw. im Endeffekt dann ein tatsächliches Kupplungsmoment (MK_{Ist}) zu realisieren, das insbesondere im wesentlichen dem gewünschten Kupplungsmoment (M_{KSoll}) entspricht.

## Claims

1. A method for controlling and/or regulating a wet-running clutch of a motor vehicle, in particular at least one of the clutches or both clutches of a dual clutch of a motor vehicle, in particular for the start-up process and/or for switching operations of a motor vehicle, wherein with the aid of a control device (1) a specific clutch torque (M_{K}) is adjusted and a specific clutch pressure (P_{K}) is applied to the clutch to adjust this specific clutch torque (M_{K}) and the clutch is operated with a specific clutch slip (nₛ), wherein the functional dependency of the clutch torque (M_{K}) on the clutch pressure (P_{K}) is defined by at least one clutch characteristic curve (KK) for a specific range, stored in particular in the control device, wherein the clutch characteristic curve (KK) also inherently has a specific friction value or the stored clutch characteristic curve (KK) is based on an inherent friction value, and wherein initially a friction value correction factor (RKF) is defined and/or determined according to a desired clutch torque (MKₛₒₗₗ) and/or according to the clutch slip (nₛ) and/or according to the clutch temperature (T) and/or according to the state of aging of the clutch, **characterized in that** with the aid of the friction value correction factor (RKF) based on the clutch characteristic curve (KK) a corrected clutch torque (M_{Ksoll-Korrektur}) is determined and/or calculated, that by means of the clutch characteristic curve (KK) the corrected clutch pressure (P_{Ksoll-Korrektur}) associated with this corrected clutch torque (M_{Ksoll-Korrektur}) is then determined, wherein the corrected clutch pressure (P_{Ksoll-Korrektur}) determined in this way is then also adjusted to the clutch.

2. The method according to Claim 1, **characterized in that** at least one first characteristic field (2) is stored for a specific first clutch temperature (T), wherein in the first characteristic field (2) specific first friction value factors (RWF₁) are stored for different clutch slip rotational speeds (nₛ) and for different desired clutch torques (M_{Ksoll}).

3. The method according to Claim 1, **characterized in that** a plurality of such first characteristic fields (2) are stored for respective different specific clutch temperatures (T).

4. The method according to Claim 1 or 2, **characterized in that** at least one second characteristic field (3) is stored for the state of aging of the clutch, wherein in the second characteristic field (3) respective specific second friction value factors (RWF₂) are stored for different running performances of the clutch and respective specific second friction value factors (RWF₂) are stored for different clutch work performed.

5. The method according to any one of the preceding claims, **characterized in that** the first and/or second friction value factors (RWF₁/RWF₂) are scaled relative to the friction value inherent in the clutch characteristic curve (KK), in particular the inherent friction value underlying the clutch characteristic curve (KK) is evaluated or determined with "100%" or with "1" and the first and/or the second friction value factor (RWF₁/RWF₂) is for this purpose accordingly relatively scaled in each case.

6. The method according to any one of the preceding claims, **characterized in that** in a first step the first friction value factor (RWF₁) is determined with the aid of a first characteristic field (2) and/or the second friction value factor (RWF₂) is determined in a second step with the aid of the second characteristic field (3).

7. The method according to any one of the preceding claims, **characterized in that** initially a difference (Δ) is determined in particular by subtraction between the determined first friction value factor (RWF₁) and the inherent friction value , that this determined difference (Δ) is once again corrected or adapted with the aid of the second friction value factor (RWF₂), in particular the determined difference (Δ) is multiplied by the second friction value factor (RWF₂), in order to determine a difference correction value (Δ_{Korrektur}) also taking into account the state of aging of the clutch.

8. The method according to Claim 7, **characterized in that** from the determined difference correction value (Δ_{Korrektur}) and the inherent friction value the friction value correction factor (RKF), is determined in particular by an addition.

9. The method according to Claim 8, **characterized in that** with the aid of the friction value correction factor (RKF) and of the desired clutch torque (M_{Ksoll}) the then valid corrected clutch torque (M_{Ksoll-Korrektur}) to be adjusted by the control device (1) for the clutch characteristic curve (KK) is determined, in particular by a division of the desired clutch torque (M_{Ksoll-Korrektur}) by the friction value correction factor (RFK).

10. The method according to Claim 9, **characterized in that** with the aid of the corrected clutch torque (M_{Ksoll-Korrektur}) by means of the clutch characteristic curve (KK) the associated corrected clutch pressure (P_{Ksoll-korrektur}) is determined , which then is used by the control device (1) as the value for the clutch pressure (P_{K}) actually to be adjusted, in order to realize the desired clutch torque (M_{Ksoll}) or in the end to then realize an actual clutch torque (M_{Kist}), which in particular corresponds substantially to the desired clutch torque (M_{Ksoll}).

## Revendications

1. Procédé de contrôle et/ou de régulation d'un embrayage humide d'un véhicule automobile, plus particulièrement d'au moins un des embrayages ou des deux embrayages d'un double embrayage d'un véhicule automobile, plus particulièrement pour le processus de démarrage et/ou pour des opérations de changement de vitesse d'un véhicule automobile, moyennant quoi, à l'aide d'un appareil de commande (1), un couple d'embrayage (M_{K}) déterminé est réglé et, pour le réglage de ce couple d'embrayage (M_{K}) déterminé, l'embrayage est sollicité avec une pression d'embrayage (P_{K}) déterminée et fonctionne avec un patinage d'embrayage (ns) déterminé, la dépendance fonctionnelle du couple d'embrayage (M_{K}) par rapport à la pression d'embrayage (P_{K}) étant définie par au moins une courbe caractéristique d'embrayage (KK), enregistrée dans l'appareil de commande, pour une zone déterminée, la courbe caractéristique d'embrayage (KK) présentant également, de manière inhérente, une valeur de friction déterminée, ou la courbe caractéristique (KK) enregistrée étant basée sur une valeur de friction inhérente et un facteur de correction de valeur de friction (RKF) étant d'abord déterminé et/ou fixé en fonction d'un couple d'embrayage (MK_{Soll}) et/ou en fonction du patinage d'embrayage (ns) et/ou en fonction de la température d'embrayage (T) et/ou en fonction de l'état de vieillissement de l'embrayage, **caractérisé en ce que**, à l'aide du facteur de correction de valeur de friction (RKF), sur la base de la courbe caractéristique (KK), un couple d'embrayage corrigé (M_{KSoll-Korrektur}) est ensuite déterminé et/ou calculé, **en ce que**, à l'aide de la courbe caractéristique (KK), la pression d'embrayage corrigée (P_{KSoll-Korrektur}) correspondant à ce couple d'embrayage corrigé (MK_{Soll-Korrektur}) est alors déterminée, la pression d'embrayage corrigée (P_{KSoll-Korrektur}) ainsi déterminée étant ensuite également réglé sur l'embrayage.

2. Procédé selon la revendication 1, **caractérisé en ce qu'**au moins un premier champ caractéristique (2) est enregistré pour une première température d'embrayage (T) déterminée, moyennant quoi, dans le premier champ caractéristique (2), pour différentes vitesses de rotation de patinage d'embrayage (ns) et pour différents couples d'embrayage souhaités (M_{KSoll}), des premiers facteurs de valeurs de friction (RWF₁) déterminés sont enregistrés.

3. Procédé selon la revendication 1, **caractérisé en ce qu'**une pluralité de ces premiers champs caractéristiques (2) sont enregistrés pour différentes températures d'embrayage (T) déterminées.

4. Procédé selon la revendication 1 ou 2, **caractérisé en ce qu'**au moins un deuxième champ caractéristique (3) est enregistré pour l'état de vieillissement de l'embrayage, moyennant quoi, dans le deuxième champ caractéristique (3), pour différentes puissances de l'embrayage et pour différents travaux d'embrayage fournis, sont enregistrés des deuxièmes facteurs de valeurs de friction (RWF₂) déterminés.

5. Procédé selon l'une des revendications précédentes, **caractérisé en ce que** les premiers et/ou deuxièmes facteurs de valeurs de friction (RWF₁/RWF₂) sont échelonnés par rapport à la valeur de friction inhérente dans la courbe caractéristique d'embrayage (KK), plus particulièrement la valeur de friction inhérente sur laquelle est basée la courbe caractéristique d'embrayage (KK) est évaluée ou déterminée comme étant égale à « 100 % » ou à « 1 » et le premier et/ou le deuxième facteur de valeur de friction (RWF₁/RWF₂) sont échelonnés de manière relative en conséquence.

6. Procédé selon l'une des revendications précédentes, **caractérisé en ce que**, dans une première étape, le premier facteur de valeur de friction (RWF₁) est déterminé à l'aide d'un premier champ caractéristique (2) et/ou le deuxième facteur de valeur de friction (RWF₂) est déterminé dans une deuxième étape à l'aide du deuxième champ caractéristique (3).

7. Procédé selon l'une des revendications précédentes, **caractérisé en ce qu'**une différence (Δ) est d'abord déterminée, plus particulièrement par soustraction entre le premier facteur de valeur de friction (RWF₁) et la valeur de friction inhérente, **en ce que** cette différence (Δ) déterminée est corrigée ou ajustée encore une fois à l'aide du deuxième facteur de valeur de friction (RWF₂), plus particulièrement la différence (Δ) déterminée est multipliée par le deuxième facteur de valeur de friction (RWF₂) afin de déterminer une valeur de correction de différence (Δ_{Korrektur}) tenant également compte de l'état de vieillissement de l'embrayage.

8. Procédé selon la revendication 7, **caractérisé en ce que**, à partir de la valeur de correction de différence (Δ_{Korrektur}) déterminée et de la valeur de friction inhérente, le facteur de correction de valeur de friction (RKF) est déterminé, plus particulièrement par une addition.

9. Procédé selon la revendication 8, **caractérisé en ce que**, à l'aide du facteur de correction de valeur de friction (RKF) et du couple d'embrayage souhaité (M_{KSoll}), le couple d'embrayage corrigé (M_{KSoll-Korrektur}), alors valable pour la courbe caractéristique d'embrayage (KK), à régler par l'appareil de commande (1), est déterminé, plus particulièrement par une division du couple d'embrayage souhaité (M_{KSoll}) par le facteur de correction de valeur de friction (RKF).

10. Procédé selon la revendication 9, **caractérisé en ce que**, à l'aide du couple d'embrayage corrigé (M_{KSoll-Korrektur}), grâce à la courbe caractéristique (KK), la pression d'embrayage corrigée (P_{KSoll-Korrektur}) correspondante est déterminée, qui est ensuite utilisée par l'appareil de commande (1) en tant que valeur pour la pression d'embrayage (P_{K}) à régler réellement, afin de réaliser le couple d'embrayage souhaité (M_{KSoll}) ou de réaliser ensuite au final un couple d'embrayage réel (MK_{Ist}) qui correspond plus particulièrement globalement au couple d'embrayage souhaité (M_{KSoll}).
